# EUROPEAN PATENT SPECIFICATION

(11) **EP 2 652 002 B1**
(45) Date of publication and mention of the grant of the patent: **03.09.2014**
(21) Application number: 11788249.8
(22) Date of filing: 19.10.2011
(51) Int. Cl.: C08G 59/66, C08L 63/00, C08G 59/02

(54) **CURABLE COMPOSITIONS**
HÄRTBARE ZUSAMMENSETZUNGEN
COMPOSITIONS DURCISSABLES

(30) Priority: 17.12.2010 US 201061424096 P
(43) Date of publication of application: 23.10.2013
(73) Proprietor: Dow Global Technologies LLC, Midland, MI 48674 (US)
(72) Inventor: MARKS, Maurice, J., Lake Jackson, TX 77566 (US)
(74) Representative: Beck Greener
(86) International application number: PCT/US2011/056858
(87) International publication number: WO 2012/082224

(56) References cited:
- EP-A2- 2 402 395
- WO-A1-2010/077485
- WO-A2-2010/043638
- US-A- 2 924 580
- US-A- 2 982 752

## Description

### BACKGROUND OF THE INVENTION

### Field of the Invention

This invention relates to curable compositions and cured products made therefrom. More specifically, this invention relates to curable compositions utilizing a divinylarene dioxide such as divinylbenzene dioxide and a polythiol curing agent, wherein such curable compositions cure at a reasonable rate, and the cured products made from the curable compositions have good solvent resistance and good surface hardness properties. The compositions of the present invention may be useful, for example, for fabricating castings, composites, coatings and adhesives.

### Description of Background and Related Art

Divinylarene dioxides are known to be cured with a variety of curing agents. For example, the curing of admixtures comprising divinylarene dioxides and polythiols is taught in U.S. Patent No. 2,927,580. As described in Chapter 15.5 of "Epoxy Resins" by Ha Q. Pham and Maurice J. Marks in Ullmann's Encyclopedia of Industrial Chemistry*,* the curing of epoxy resins with polythiols requires a tertiary amine catalyst. However, it has been found that the tertiary amine catalysts taught in U.S. Patent No. 2,927,580 are ineffective in divinylarene dioxide formulations.

Therefore, it would be desirable to prepare a curable composition comprising a divinylarene dioxide, a polythiol, and a catalyst which cures under ambient conditions (e.g., at a temperature of from about 20 °C to about 25 °C and at a pressure of about 1 bar) within about 24 hours of formulating the composition and applying composition to various substrates.

### SUMMARY OF THE INVENTION

The present invention solves the problems of the prior art by providing a curable composition such as a curable epoxy resin composition comprising (a) at least one divinylarene dioxide, (b) at least one polythiol compound, and (c) at least one catalyst selected from catalysts containing a fragment corresponding to the following Formula I: 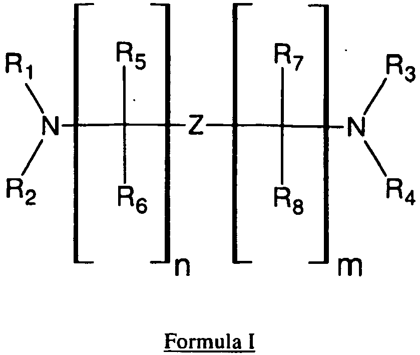 wherein Z in the above structure may be selected from O, S, or a single bond; R₁ - R₄ may be selected from an alkyl or a cycloalkyl each individually having from 1 to about 20 carbon atoms; R₅ - R₈ may be selected from H, or an alkyl or a cycloalkyl, wherein the alkyl or cycloalkyl each individually having from 1 to about 20 carbon atoms; any of R₁ - R₈ may be bonded to form one or more rings; any of R₁ - R₈ may contain functional groups tolerant to tertiary amines such as an aryl, an alkenyl, or an alkynyl each individually having from 1 to about 20 carbon atoms, an ether, a thioether, a keto, an ester, a hydroxyl, a cyano, an imino, or a nitro; n may be an integer from 2 to 20; m may be an integer from 0 to 18; and m + n may be an integer of less than or equal to (≤ ) about 20. The remaining portion of the catalyst containing the above fragment of Formula I may be any organic radical having from 1 to about 20 carbon atoms and optionally bearing any one or more of the above functional groups tolerant to tertiary amines.

The composition of this invention advantageously cures under "ambient conditions" (defined herein below) within a predetermined period of time to give a non-tacky, solvent resistant cured article having good surface hardness.

One embodiment of the present invention is directed to a curable composition containing (a) at least one divinylarene dioxide, (b) at least one polythiol curing agent, and (c) at least one catalyst selected from catalysts compounds containing a fragment corresponding to Formula I above such that the resulting curable composition cures under ambient conditions within a predetermined amount of time such as for example within about 48 hours to provide materials having useful properties. The curable compositions of the present invention can be useful, for example, as shaped articles, coatings, composites, and adhesives.

In one preferred embodiment of the present invention, a divinylarene dioxide such as for example divinylbenzene dioxide (DVBDO) may be used with a polythiol curing agent such as for example a polymercaptan.or a polysulfide.

### DETAILED DESCRIPTION OF THE INVENTION

One broad aspect of the present invention includes a curable resin composition comprising (a) at least one divinylarene dioxide; (b) at least one polythiol curing agent; and (c) at least one catalyst selected from catalyst compounds containing a fragment corresponding to Formula I above; wherein the resulting curable composition is capable of being cured at ambient conditions to provide a cured product within a predetermined amount of time for example within about 48 hours.

The divinylarene dioxide, component (a), useful in the present invention may comprise, for example, any substituted or unsubstituted arene nucleus bearing one or more vinyl groups in any ring position. For example, the arene portion of the divinylarene dioxide may consist of benzene, substituted benzenes, (substituted) ring-annulated benzenes or homologously bonded (substituted) benzenes, or mixtures thereof. The divinylbenzene portion of the divinylarene dioxide may be *ortho, meta,* or *para* isomers or any mixture thereof. Additional substituents may consist of H₂O₂-resistant groups including for example a saturated alkyl or an aryl each individually having from 1 to about 20 carbon atoms, a halogen, a nitro, an isocyanate, or an RO- group wherein R may be a saturated alkyl or an aryl each individually having from 1 to about 20 carbon atoms. Ring-annulated benzenes may consist of naphthlalene, tetrahydronaphthalene, and the like. Homologously bonded (substituted) benzenes may consist of biphenyl, diphenylether, and the like.

The divinylarene dioxide used for preparing the composition of the present invention may be illustrated by general chemical Structures I-IV as follows:

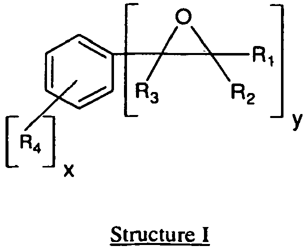

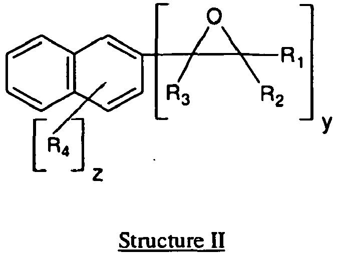

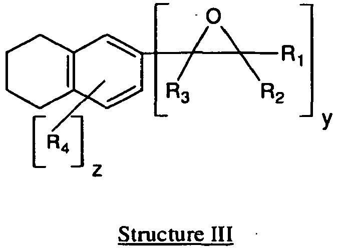

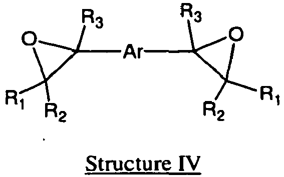

In the above Structures I, II, III, and IV of the divinylarene dioxide comonomer of the present invention, each R₁, R₂, R₃ and R₄ individually may be hydrogen; an alkyl, a cycloalkyl, an aryl or an aralkyl group each individually having from 1 to about 20 carbon atoms; or a H₂O₂-resistant group including for example a halogen, a nitro, an isocyanate, or an RO- group, wherein R may be an alkyl, an aryl or an aralkyl each individually having from 1 to about 20 carbon atoms; x may be an integer of 0 to 4; y may be an integer greater than or equal to 2; x+y may be an integer less than or equal to 6; z may be an integer of 0 to 6; and z+y may be an integer less than or equal to 8; and Ar may be an arene fragment including for example, a 1,3-phenylene group. In addition, R₄ can be a reactive group(s) including for example an epoxide, an isocyanate, or any other reactive group; and Z can be an integer from 0 to 6 depending on the substitution pattern.

In one embodiment, the divinylarene dioxide used in the present invention may be for example a divinylarene dioxide produced, for example, by the process described in U.S. Patent Provisional Application Serial No. 61/141457, filed December 30, 2008, entitled "Process for Preparing Divinylarene Dioxides", by Marks et al., incorporated herein by reference. Divinylarene dioxide compounds useful in the present invention are also disclosed, for example, in U.S. Patent No. 2,924,580, incorporated herein by reference.

In another embodiment, the divinylarene dioxide useful in the present invention may comprise, for example, divinylbenzene dioxide, divinylnaphthalene dioxide, divinylbiphenyl dioxide, divinyldiphenylether dioxide, or mixtures thereof.

In a preferred embodiment of the present invention, the divinylarene dioxide used in the epoxy resin formulation may be for example divinylbenzene dioxide (DVBDO). For example, divinylbenzene dioxide, as component (a), useful in the present invention may include a divinylbenzene dioxide as illustrated by the following chemical formula of Structure V:

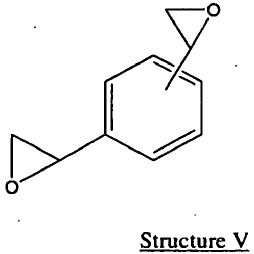

The chemical formula of the above DVBDO compound may be as follows: C₁₀H₁₀O₂; the molecular weight of the DVBDO is about 162.2; and the elemental analysis of the DVBDO is about: C, 74.06; H, 6.21; and O, 19.73 with an epoxide equivalent weight of about 81 g/mol.

Divinylarene dioxides, particularly those derived from divinylbenzene such as for example DVBDO, are class of diepoxides which have a relatively low liquid viscosity but a higher rigidity and crosslink density than conventional epoxy resins.

Structure VI below illustrates an embodiment of a preferred chemical structure of the DVBDO useful in the present invention:

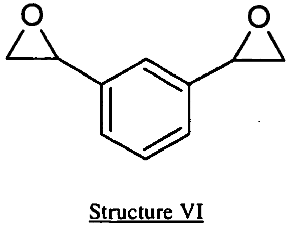

Structure VII below illustrates another embodiment of a preferred chemical structure of the DVBDO useful in the present invention:

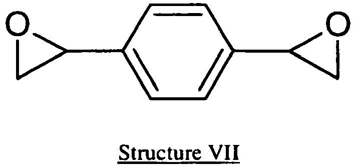

When DVBDO is prepared by the processes known in the art, it may be possible to obtain one of three possible isomers: *ortho, meta,* and *para.* Accordingly, the present invention includes a DVBDO illustrated by any one of the above Structures individually or as a mixture thereof. Structures VI and VII above show the *meta* (1,3-DVBDO) and *para* isomers of DVBDO, respectively. The *ortho* isomer is rare; and usually DVBDO is mostly produced generally in a range of from about 9:1 to about 1:9 ratio of *meta* (Structure VI) to *para* (Structure VII) isomers. The present invention preferably includes as one embodiment a range of from about 6:1 to about 1:6 ratio of Structure VI to Structure VII, and in other embodiments the ratio of Structure VI to Structure VII may be from about 4:1 to about 1:4 or from about 2:1 to about 1:2.

In yet another embodiment of the present invention, the divinylarene dioxide may contain quantities [such as for example less than about 20 weight percent (wt %)] of substituted arenes. The amount and structure of the substituted arenes depend on the process used in the preparation of the divinylarene precursor to the divinylarene dioxide. For example, divinylbenzene prepared by the dehydrogenation of diethylbenzene (DEB) may contain quantities of ethylvinylbenzene (EVB) and DEB. Upon reaction with hydrogen peroxide, EVB produces ethylvinylbenzene monoxide while DEB remains unchanged. The presence of these compounds can increase the epoxide equivalent weight of the divinylarene dioxide to a value greater than that of the pure compound but can be utilized at levels of 0 to 99 percent (%) of the epoxy resin portion.

In one embodiment, the divinylarene dioxide useful in the present invention comprises, for example, DVBDO, a low viscosity liquid epoxy resin. The viscosity of the divinylarene dioxide used in the process of the present invention ranges generally from about 0.001 Pa s to about 0.1 Pa s in one embodiment, from about 0.01 Pa s to about 0.05 Pa s in another embodiment, and from about 0.01 Pa s to about 0.025 Pa s in yet another embodiment, at 25 °C.

The concentration of the divinylarene oxide used in the present invention as the epoxy resin portion of the formulation may range generally from about 0.5 wt % to about 100 wt % in one embodiment, from about 1 wt % to about 99 wt % in another embodiment, from about 2 wt % to about 98 wt % in yet another embodiment, and from about 5 wt % to about 95 wt % in still another embodiment, depending on the fractions of the other formulation ingredients.

The divinylarene dioxide used in the present invention may be used as the sole epoxy resin component in the curable composition of the present invention; or the divinylarene dioxide may be used in combination with other epoxy resins known in the art such as epoxy resins described in Lee, H. and Neville, K., Handbook of Epoxy Resins, McGraw-Hill Book Company, New York, 1967, Chapter 2, pages 2-1 to 2-27, incorporated herein by reference. Particularly suitable epoxy resins other than the divinylarene dioxide may include for example epoxy resins based on reaction products of polyfunctional alcohols, phenols, cycloaliphatic carboxylic acids, aromatic amines, or aminophenols with epichlorohydrin. A few non-limiting embodiments include, for example, bisphenol A diglycidyl ether, bisphenol F diglycidyl ether, resorcinol diglycidyl ether, and triglycidyl ethers of para-aminophenols. Other suitable epoxy resins known in the art include for example reaction products of epichlorohydrin with o-cresol and, respectively, phenol novolacs. It is also possible to use a mixture of two or more other epoxy resins with the divinylarene dioxide. The other epoxy resin may also be selected from commercially available products such as for example, D.E.R. 331®, D.E.R.332, D.E.R. 334, D.E.R. 580, D.E.N. 431, D.E.N. 438, D.E.R. 736, or D.E.R. 732 epoxy resins available from The Dow Chemical Company.

The concentration of total epoxy resin used in the formulation of the present invention may range from about 1 wt % to about 99 wt % in one embodiment, from about 2 wt % to about 98 wt % in another embodiment, from about 5 wt % to about 95 wt % in yet another embodiment, and from about 10 wt % to about 90 wt % in still another embodiment, depending on the fractions of the other formulation ingredients.

In the broadest scope of the present invention, any polythiol compound containing at least one thiol (-SH) moiety can be used in the curable composition of the present invention. For example, in one embodiment of the polythiol compound, component (b), useful in the present invention may comprise, for example any organic compound bearing two or more thiol (-SH) groups. In one embodiment, the polythiol compound, component (b), useful in the present invention may comprise, for example any substituted or unsubstituted alkyl or aromatic group each having from 1 to about 20 carbon atoms, bearing two or more thiol (-SH) moieties. Examples of polythiols useful in the present invention include polymercaptans such as Capcure 3-800,40 SEC HV, and LOF commercially available from BASF, Inc.; polysulfides such as Thiokol LP-2, LP-3, LP-12, LP-31, LP-32, LP-33, LP-977, and LP-980 commercially available from Toray Fine Chemicals Co., Ltd.; Thiocure PETMP, TMPMP, GDMP, and TMPMA commercially available from Bruno Bock Chemische Fabrik GmbH & Co. KG; Polymercaptan 358,407, and 805C commercially available from Chevron Phillips Chemical Co. LLP; and mixtures thereof.

In general, the concentration of the polythiol compound used in the present invention as component (b) of the curable composition may range generally from about 1 wt % to about 99 wt % in one embodiment, from about 2 wt % to about 98 wt % in another embodiment, from about 5 wt % to about 95 wt % in yet another embodiment, and from about 10 wt % to about 90 wt % in still another embodiment.

In the broadest scope of the present invention, the catalyst of the present invention may comprise any amine compound containing at least two nitrogen atoms separated by two or more substituted or unsubstituted carbon atoms. For example, the catalyst useful in the present invention may include any compound which contains a fragment represented by the following chemical Formula I: 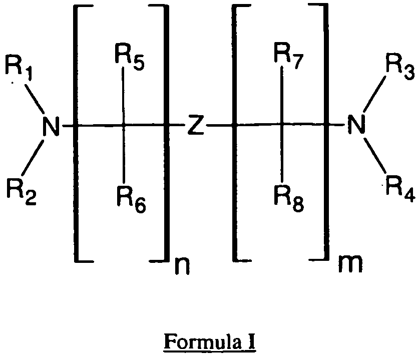 wherein Z, R₁ - R₈, n, m, and m + n are as defined above. The remaining portion of the catalyst containing the above fragment of Formula I may be any organic radical having from 1 to about 20 carbon atoms and optionally bearing any of the above defined functional groups tolerant to tertiary amines.

Suitable catalysts useful in the present invention may include for example one or more of the following catalysts: 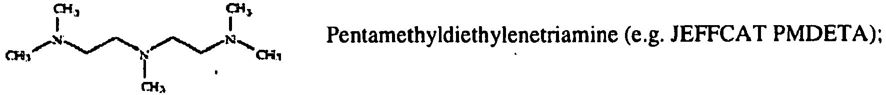 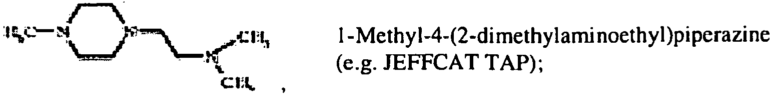 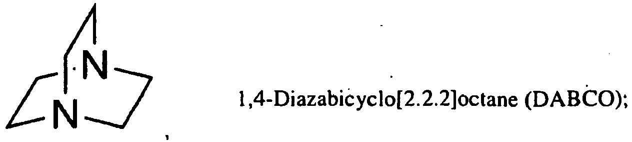 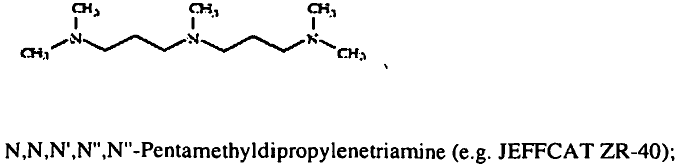 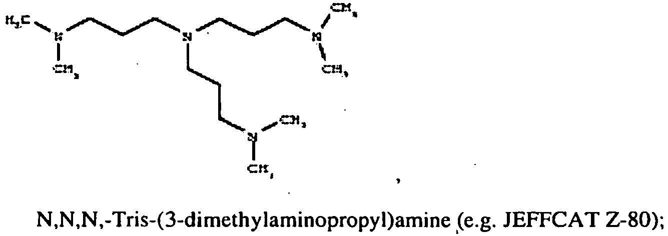 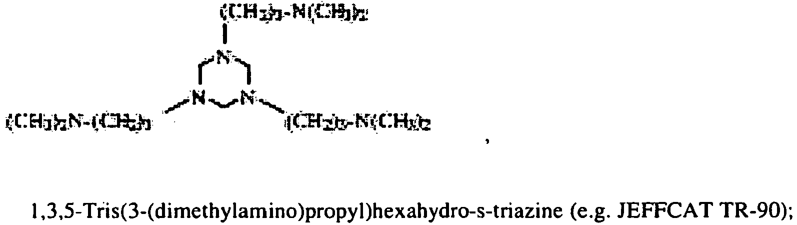 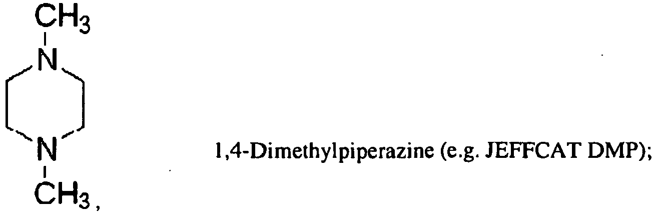 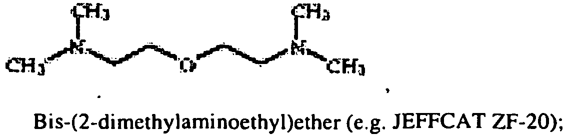 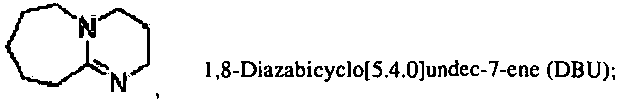 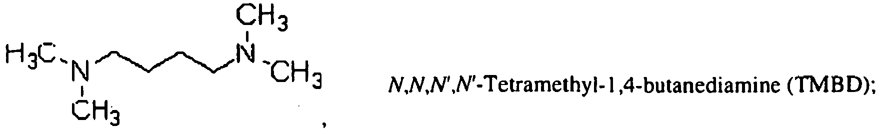 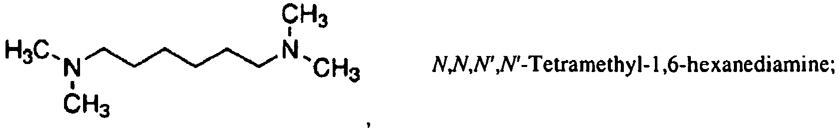 and mixtures thereof.

The catalyst used in the present invention may be used for example as a single component or in combination with other catalysts known in the art. The concentration of catalyst used in the formulation of the present invention may range from about 0.01 wt % to about 20 wt % in one embodiment, from about 0.1 wt % to about 10 wt % in another embodiment, from about 1 wt % to about 10 wt % in yet another embodiment, and from about 2 wt % to about 10 wt % in still another embodiment depending, on the fractions of the other formulation ingredients.

Other optional components may be used in the curable composition of the present invention including for example curing agents (used as co-curing agents) other than the thiol compounds such as amines bearing active hydrogens; other thermoset resins such as epoxy resins described in the aforementioned Handbook of Epoxy Resins by Lee et al.; fillers such as clay, talc, silica, or calcium carbonate; solvents such as ethers or alcohols; toughening agents such as elastomers or liquid block copolymers; pigments such as carbon black or iron oxide; surfactants such as silicones; fibers such as fiberglass or carbon fiber; and mixtures two or more of the above optional components.

In general, the concentration of any one of the optional compounds used in the present invention composition may range generally from 0 wt % to about 90 wt % in one embodiment, from about 0.01 wt % to about 80 wt % in another embodiment, from about 1 wt % to about 65 wt % in yet another embodiment, and from about 10 wt % to about 50 wt % in still another embodiment.

The preparation of the curable resin composition of the present invention is achieved for example by admixing in a vessel the components of the present invention including a divinylarene dioxide, a polythiol curing agent, a catalyst, and any other optional components such as one or more of the aforementioned optional additives and/or a solvent; and then allowing the components to formulate into a curable resin composition. There is no criticality to the order of mixture, i.e., the components of the formulation or composition of the present invention may be admixed in any order to provide the thermosettable or curable composition of the present invention. Any of the above-mentioned optional assorted formulation additives, for example fillers, may also be added to the composition during the mixing or prior to the mixing to form the composition. In some instances it may be preferable to dissolve the catalyst into either the epoxy resin component or into the polythiol component prior to combining with the other formulation components. By this approach solutions of catalysts in either the epoxy or the polythiol component can be prepared using elevated temperatures without concern of premature reaction of the formulation.

The components for preparing the curable composition are typically mixed and homogeneously dispersed at a temperature enabling the preparation of an effective resin composition having a viscosity for the desired application. In one embodiment, the temperature during the mixing of the components may be generally from about 0 °C to about 100 °C and from about 20 °C to about 50 °C in another embodiment. In one preferred embodiment, the divinylarene dioxide, the polythiol compound, the catalyst, and optional components may be mixed at a temperature of from about 20 °C to about 50 °C. At temperatures below the aforementioned ranges, the viscosity of the formulation can become excessive, while at temperatures above the aforementioned ranges, the formulation can react prematurely.

The curable resin composition of the present invention described above, have improved cure rates compared to known compositions in the art. For example, the cure rate of the compositions of the present invention provides non-liquid, tack-free, and solvent resistant cured materials within a predetermined period of time such as for example within about 48 hours in one embodiment, within about 24 hours in another embodiment, and within about 18 hours in yet another embodiment; wherein the predetermined period of time is the tme of preparing the formulation, applying the formulation to a substrate, and exposing the formulation to ambient conditions.

The divinylarene dioxide such as DVBDO, component (a) of the present invention, may be used as the sole epoxy resin to form the resin matrix in the final formulation; or the divinylarene dioxide resin may be used in combination with another thermoset resin such as an additional conventional epoxy resin as one of the components in the final formulation.

One of the advantages of the curable composition of the present invention includes the ability to cure the composition at ambient conditions. By "ambient conditions" as used herein with reference to a composition of the present invention, it is meant that the composition can be cured at a temperature of from about 0 °C to about 50 °C and at a pressure of about 1 bar. In one preferred embodiment, the composition may be cured at room temperature (about 25 °C).

In one embodiment, the curable resin composition may be cured at a predetermined temperature and for a predetermined period of time sufficient to partially cure or completely cure the composition. For example, the temperature of curing the formulation may be generally from about 0 °C to about 50 °C in one embodiment; from about 10 °C to about 40 °C in another embodiment; and from about 20 °C to about 30 °C in yet another embodiment; and the curing time may be chosen between about 0.01 hour to about 48 hours in one embodiment, between about 1 hour to about 24 hours in another embodiment, and between about 1 hour to about 18 hours in yet another embodiment. Below a period of time of about 0.01 hour, the time may be too short to ensure sufficient reaction under conventional processing conditions; and above about 48 hours, the time may be too long to be practical or economical.

The curing process of the present invention may be a batch or a continuous process. The reactor used in the process may be any reactor and ancillary equipment well known to those skilled in the art.

The process to produce a thermoset product from the curable composition of the present invention may include for example gravity casting, vacuum casting, automatic pressure gelation (APG), vacuum pressure gelation (VPG), infusion, filament winding, lay up injection, transfer molding, prepreging, dipping, coating, spraying, brushing, and the like.

The resulting cured composition upon curing the curable composition displays excellent properties, such as resistance to organic solvents and surface hardness. The properties of the cured compositions of the present invention may depend on the nature of the components of the curable formulation. In one preferred embodiment, the cured compositions of the present invention show no marring after about 100 double-rubs of a cotton-tipped applicator soaked in methylethyl ketone. Also, in one preferred embodiment, the cured compositions of the present invention exhibit a Shore A hardness value of from about 5 to about 100, from about 10 to about 100 in another embodiment, and from about 20 to about 100 in yet another embodiment.

The curable composition of the present invention may be used in applications where conventional epoxy resins are used such as in the field of coatings, films, adhesives, encapsulations, castings, composites, laminates, electronics, electrical laminates, insulation, civil engineering and construction; and the like. In one embodiment, for example, the cured composition of the present invention may be useful for ambient cured coatings and adhesives.

### EXAMPLES

The following examples and comparative examples further illustrate the present invention in detail but are not to be construed to limit the scope thereof.

In the following Examples, various terms and designations used such as:
"DVBDO" stands for divinylbenzene dioxide. The DVBDO used in the Examples is a divinylbenzene dioxide having an epoxide equivalent weight of 81 g/eq.
Polymercaptan 358 is a mercaptanized soybean oil (MSO) having a thiol equivalent weight of 354 g/eq.
Jeffcat^{™} products are amine catalysts which are commerically available from Huntsman Performance Products; and Jeffcat^{™} is a trademark of Huntsman.

In the following Examples, standard analytical equipment and methods are used such as for example:
Shore A hardness was determined using ASTM D2240 with a Shore A durometer from Shore-Instron, Inc.

"Tack-free" means that the cured formulation is non-tacky as determined by the absence of sticking or removal of material from the surface of the cured formulation by manual pressing with a wooden stick.

### Examples 1-11: Ambient Cure Catalysts for DVBDO and Polymercaptan 358

To a 20 mL vial were added 1.0 g of DVBDO, 4.0 g of Polymercaptan 358 (epoxide/thiol equivalent ratio of 1.1) and 0.1 g of amine catalyst. The resulting formulation mixture was mixed for 1 minute, poured into a 5.1 cm aluminum dish, and allowed to cure for 18 hours at ambient temperature (20 - 25 °C) to form a tack-free, flexible solid. The amine catalyst used in Examples 1-11 are listed in Table I. In addition, the Shore A hardness values of the resultant cured materials are also listed in Table I.

In Examples 1-11, the DVBDO-catalyst mixture was heated to 50 °C for 5 minutes to dissolve the catalyst and then the mixture was allowed to cool to about 30 °C. The cooled DVBDO-catalyst mixture was added to MSO (a thiol compound) and the two were mixed together. The resultant formulation mixture was poured into the aluminum dish as described above to cure. Each cured sample material of Examples 1-11 was tack-free and showed no marring after 100 double-rubs with a cotton-typed applicator soaked in methylethyl ketone.

**Table I - Catalysts for Shore A Hardness of DVBDO-MSO Cured Compositions.**

| Example | Amine Catalyst | Shore A Hardness |
|---|---|---|
| 1 | 1,4-diazabicyclo[2.2.2]octane (DABCO) | 62 |
| 2 | N,N,N',N",N"-pentamethyldiethylenetriamine (Jeffcat PMDETA) | 50 |
| 3 | 1,4-dimethylpiperazine (Jeffcat DMP) | 35 |
| 4 | 1-methyl-4-(2-dimethylaminoethyl)piperazine (Jeffcat TAP) | 48 |
| 5 | bis-(2-dimethylaminoethyl)ether (Jeffcat ZF-20) | 54 |
| 6 | N,N,N',N",N"-pentamethyldipropylenetriamine (Jeffcat ZR-40) | 53 |
| 7 | N,N,N,-tris-(3-dimethylaminopropyl)amine (Jeffcat Z-80) | 57 |
| 8 | 1,3,5-tris(3-(dimethylamino)propyl)hexahydro-s-triazine (Jeffcat TR-90) | 57 |
| 9 | 1,8-diazabicyclo[5.4.0]undec-7-ene (DBU) | 48 |
| 10 | N,N,N',N'-tetramethyl-1,4-butanediamine (TMBD) | 47 |
| 11 | N,N;N',N'-tetramethyl-1,6-hexanediamine (TMHD) | 54 |

### Comparative Examples A - I Ambient Cure Non-Catalysts for DVBDO and Polymercaptan 358

The amines listed in Table II were evaluated as described for Examples 1 - 11. After 18 hours at ambient temperature, the formulations of Comparative Examples A - I remained liquids and did not cure.

**Table II - Non-Catalysts for DVBDO-MSO Formulations**

| Comparative Example | Amine Non-Catalyst |
|---|---|
| A | triethylamine |
| B | N,N-dimethylbenzylamine (BDMA) |
| C | 2,4,6-tris(dimethylaminomethyl)phenol (DMP-30) |
| D | 1,8-bis(dimethylamino)naphthalene |
| E | 1,1,3,3-tetramethylguanidine |
| F | 1,3,5-trimethylhexahydro-1,3,5-triazine |
| G | diethylenetriamine |
| H | pyrollidine |
| I | piperidine |

The chemical structures and the chemical names of the non-catalysts used in the above Comparative Examples A - I shown in Table II are as follows:

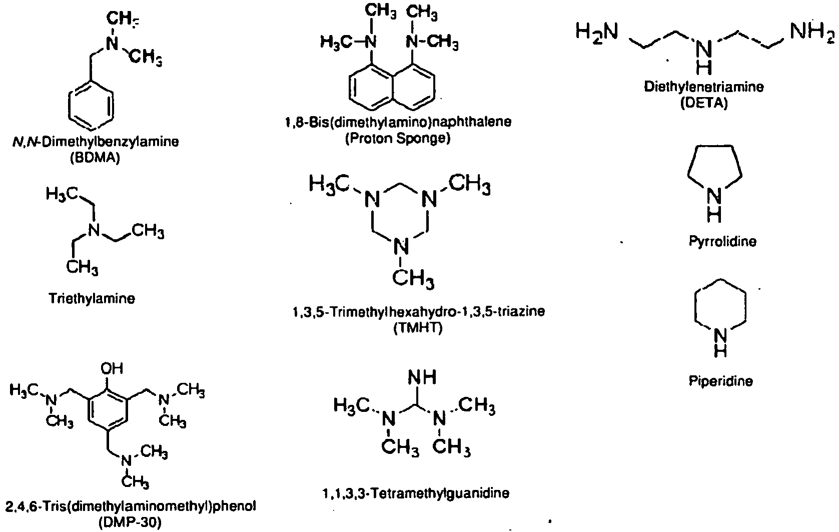

## Claims

1. A curable composition capable of being cured at ambient conditions comprising (a) at least one divinylarene dioxide; (b) at least one polythiol compound curing agent; and (c) at least one catalyst; wherein the at least one catalyst comprises one or more compounds containing a fragment of the following Formula I: 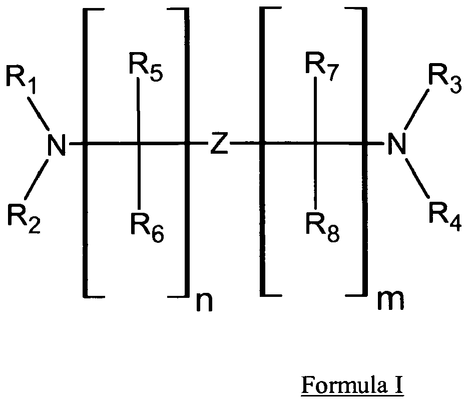 wherein Z in the above structure of Formula I comprises O, S, or a single bond; R₁ - R₄ comprises an alkyl or a cycloalkyl each individually having from 1 to about 20 carbon atoms; R₅ - R₈ each individually comprises H, or an alkyl or a cycloalkyl, wherein the alkyl or cycloalkyl each individually having from 1 to about 20 carbon atoms; n comprises an integer from 2 to 20; m comprises an integer from 0 to 18; and m + n comprises an integer of less than or equal to about 20; and wherein the remaining portion of the catalyst containing the above fragment of Formula I comprises an organic radical having from 1 to about 20 carbon atoms; such that the curable composition upon curing is cured at ambient conditions.

2. The curable composition of claim 1, wherein the at least one divinylarene dioxide comprises divinylbenzene dioxide.

3. The curable composition of claim 1, wherein the at least one polythiol compound curing agent comprises a compound containing at least one thiol moiety.

4. The curable composition of claim 1, wherein n comprises an integer of 2 up to less than or equal to 10; m comprises an integer of 0 up to about 8; and wherein m + n comprises an integer of less than or equal to about 18.

5. The curable composition of claim 1, wherein the curing catalyst comprises 1,4-diazabicyclo[2.2.2]octane; N,N,N',N",N"-pentamethyldiethylenetriamine; 1,4-dimethylpiperazine; 1-methyl-4-(2-dimethylaminoethyl)piperazine; bis-(2-dimethylaminoethyl)ether; N,N,N',N",N"-pentamethyldipropylenetriamine; N,N,N,-tris-(3-dimethylaminopropyl)amine; 1,3,5-tris(3-(dimethylamino)propyl)hexahydro-s-triazine; 1,8-diazabicyclo[5.4.0]undec-7-ene; N,N,N',N'-tetramethyl-1,4-butanediamine; N,N,N',N'-tetramethyl-1,6-hexanediamine; or mixtures thereof.

6. The curable composition of claim 1, wherein the composition is capable of curing to a tack-free cured composition within about 48 hours at ambient conditions.

7. A process for preparing a curable composition or system comprising admixing (a) at least one divinylarene dioxide; (b) at least one polythiol compound curing agent; and (c) at least one catalyst; wherein the at least one catalyst comprises one or more compounds containing a fragment of the following Formula I: 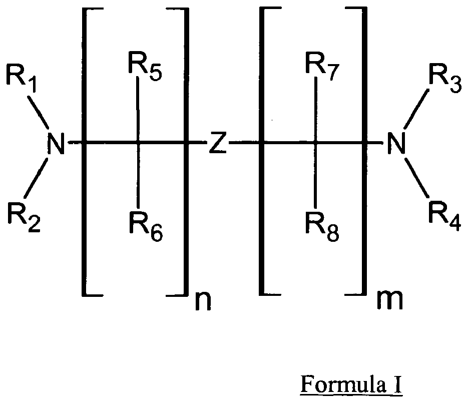 wherein Z in the above structure of Formula I comprises O, S, or a single bond; R₁ - R₄ comprises an alkyl or a cycloalkyl each individually having from 1 to about 20 carbon atoms; R₅ - R₈ each individually comprises H, or an alkyl or a cycloalkyl, wherein the alkyl or cycloalkyl each individually having from 1 to about 20 carbon atoms; n comprises an integer from 2 to 20; m comprises an integer from 0 to 18; and m + n comprises an integer of less than or equal to about 20; and wherein the remaining portion of the catalyst containing the above fragment of Formula I comprises an organic radical having from 1 to about 20 carbon atoms; such that the curable composition upon curing is cured at ambient conditions.

8. A process for preparing a curable composition or system comprising the steps of:
(I) admixing at least one divinylarene dioxide and at least one catalyst to form a first solution; wherein the at least one catalyst comprises one or more compounds containing a fragment of the following Formula I: 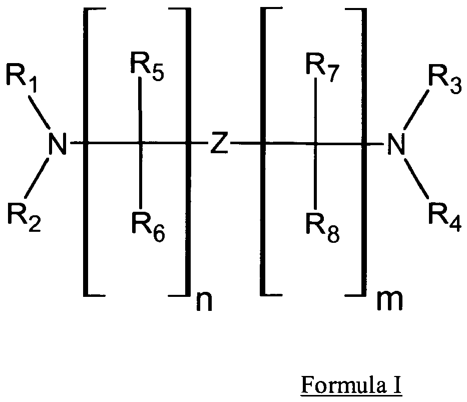 wherein Z in the above structure of Formula I comprises O, S, or a single bond; R₁ - R₄ comprises an alkyl or a cycloalkyl each individually having from 1 to about 20 carbon atoms; R₅ - R₈ each individually comprises H, or an alkyl or a cycloalkyl, wherein the alkyl or cycloalkyl each individually having from 1 to about 20 carbon atoms; n comprises an integer from 2 to 20; m comprises an integer from 0 to 18; and m + n comprises an integer of less than or equal to about 20; and wherein the remaining portion of the catalyst containing the above fragment of Formula I comprises an organic radical having from 1 to about 20 carbon atoms; such that the curable composition upon curing is cured at ambient conditions; and
(II) admixing the first solution of step (I) with at least one polythiol curing agent.

9. A process for preparing a curable composition or system comprising the steps of:
(A) admixing at least one polythiol curing agent; and at least one catalyst to form a first solution wherein the at least one catalyst comprises one or more compounds containing a fragment of the following Formula I: 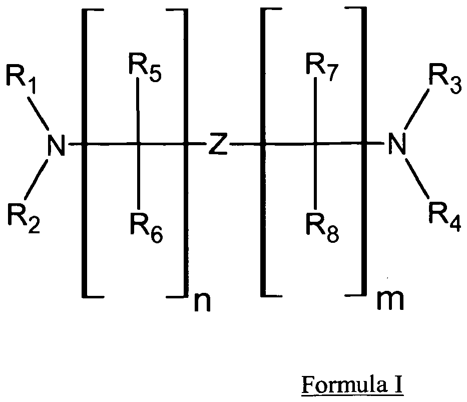 wherein Z in the above structure of Formula I comprises O, S, or a single bond; R₁ - R₄ comprises an alkyl or a cycloalkyl each individually having from 1 to about 20 carbon atoms; R₅ - R₈ each individually comprises H, or an alkyl or a cycloalkyl, wherein the alkyl or cycloalkyl each individually having from 1 to about 20 carbon atoms; n comprises an integer from 2 to 20; m comprises an integer from 0 to 18; and m + n comprises an integer of less than or equal to about 20; and wherein the remaining portion of the catalyst containing the above fragment of Formula I comprises an organic radical having from 1 to about 20 carbon atoms; such that the curable composition upon curing is cured at ambient conditions; and
(B) admixing the first solution of step (A) with at least one divinylarene dioxide.

10. A cured product comprising a cured composition of claim 1, wherein the cured product comprises a tack-free surface.

11. A cured product comprising a cured composition of claim 1, wherein the cured product comprises an un-marred surface after rubbing the surface with an organic solvent.

12. A cured product comprising a cured composition of claim 1, wherein the cured product comprises a Shore A hardness as determined by ASTM D2240 of from about 5 to about 100.

13. A process for preparing a thermoset product comprising the steps of:
(i) preparing a curable composition comprising admixing (a) at least one divinylarene dioxide; (b) at least one polythiol compound curing agent; and (c) at least one catalystwherein the at least one catalyst comprises one or more compounds containing a fragment of the following Formula I: 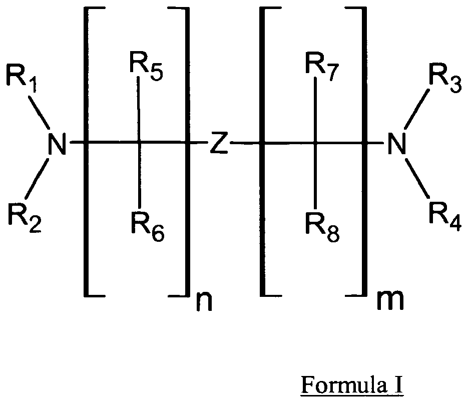 wherein Z in the above structure of Formula I comprises O, S, or a single bond; R₁ - R₄ comprises an alkyl or a cycloalkyl each individually having from 1 to about 20 carbon atoms; R₅ - R₈ each individually comprises H, or an alkyl or a cycloalkyl, wherein the alkyl or cycloalkyl each individually having from 1 to about 20 carbon atoms; n comprises an integer from 2 to 20; m comprises an integer from 0 to 18; and m + n comprises an integer of less than or equal to about 20; and wherein the remaining portion of the catalyst containing the above fragment of Formula I comprises an organic radical having from 1 to about 20 carbon atoms; such that the curable composition upon curing is cured at ambient conditions; and
(ii) curing the curable composition at ambient conditions.

14. The process of claim 13, wherein the ambient conditions include a temperature of from about 0 °C to about 50 °C.

## Patentansprüche

1. Eine härtbare Zusammensetzung, die bei Umgebungsbedingungen gehärtet werden kann, die Folgendes beinhaltet: (a) mindestens ein Divinylarendioxid; (b) mindestens ein Polythiolverbindungshärtungsmittel; und (c) mindestens einen Katalysator; wobei der mindestens eine Katalysator eine oder mehrere Verbindungen beinhaltet, die ein Fragment der folgenden Formel I enthalten: 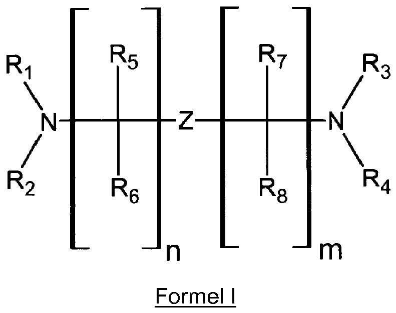 wobei Z in der obigen Struktur der Formel I O, S oder eine Einfachbindung beinhaltet; R₁-R₄ ein Alkyl oder ein Cycloalkyl, jeweils einzeln von 1 bis etwa 20 Kohlenstoffatome aufweisend, beinhalten; R₅-R₈ jeweils einzeln H oder ein Alkyl oder ein Cycloalkyl beinhalten; wobei das Alkyl oder Cycloalkyl jeweils einzeln von 1 bis etwa 20 Kohlenstoffatome aufweist; n eine ganze Zahl von 2 bis 20 beinhaltet; m eine ganze Zahl von 0 bis 18 beinhaltet; und m + n eine ganze Zahl von weniger als oder gleich etwa 20 beinhaltet; und wobei der verbleibende Abschnitt des Katalysators, der das obige Fragment der Formel I enthält, einen organischen Rest, der von 1 bis etwa 20 Kohlenstoffatome aufweist, beinhaltet; so dass die härtbare Zusammensetzung beim Härten bei Umgebungsbedingungen gehärtet wird.

2. Härtbare Zusammensetzung gemäß Anspruch 1, wobei das mindestens eine Divinylarendioxid Divinylbenzendioxid beinhaltet.

3. Härtbare Zusammensetzung gemäß Anspruch 1, wobei das mindestens eine Polythiolverbindungshärtungsmittel eine Verbindung beinhaltet, die mindestens einen Thiolteil enthält.

4. Härtbare Zusammensetzung gemäß Anspruch 1, wobei n eine ganze Zahl von 2 bis zu weniger als oder gleich 10 beinhaltet; m eine ganze Zahl von 0 bis zu etwa 8 beinhaltet; und wobei m + n eine ganze Zahl von weniger als oder gleich etwa 18 beinhaltet.

5. Härtbare Zusammensetzung gemäß Anspruch 1, wobei der Härtekatalysator Folgendes beinhaltet: 1,4-Diazabicyclo[2.2.2]octan; N,N,N',N",N"-Pentamethyldiethylentriamin; 1,4-Dimethylpiperazin; 1-Methyl-4-(2-dimethylaminoethyl)piperazin; Bis-(2-dimethylaminoethyl)ether; N,N,N',N",N"-Pentamethyldipropylentriamin; N,N,N,-Tris-(3-dimethylaminopropyl)amin; 1,3,5-Tris(3-(dimethylamino)propyl)hexahydro-s-triazin; 1,8-Diazabicyclo[5.4.0]undec-7-en; N,N,N',N'-Tetramethyl-1,4-butandiamin; N,N,N',N'-Tetramethyl-1,6-hexandiamin oder Mischungen davon.

6. Härtbare Zusammensetzung gemäß Anspruch 1, wobei die Zusammensetzung innerhalb etwa 48 Stunden bei Umgebungsbedingungen zu einer klebfreien gehärteten Zusammensetzung härten kann.

7. Ein Verfahren zum Herstellen einer härtbaren Zusammensetzung oder eines härtbaren Systems, das das Beimischen von (a) mindestens einem Divinylarendioxid; (b) mindestens einem Polythiolverbindungshärtungsmittel; und (c) mindestens einem Katalysator beinhaltet; wobei der mindestens eine Katalysator eine oder mehrere Verbindungen beinhaltet, die ein Fragment der folgenden Formel I enthalten: 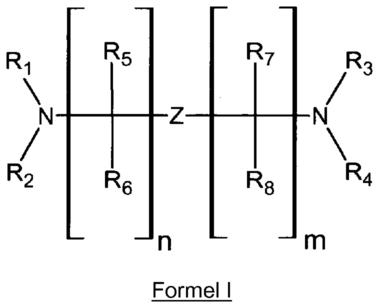 wobei Z in der obigen Struktur der Formel I O, S oder eine Einfachbindung beinhaltet; R₁-R₄ ein Alkyl oder ein Cycloalkyl, jeweils einzeln von 1 bis etwa 20 Kohlenstoffatome aufweisend, beinhalten; R₅-R₈ jeweils einzeln H oder ein Alkyl oder ein Cycloalkyl beinhalten; wobei das Alkyl oder Cycloalkyl jeweils einzeln von 1 bis etwa 20 Kohlenstoffatome aufweist; n eine ganze Zahl von 2 bis 20 beinhaltet; m eine ganze Zahl von 0 bis 18 beinhaltet; und m + n eine ganze Zahl von weniger als oder gleich etwa 20 beinhaltet; und wobei der verbleibende Abschnitt des Katalysators, der das obige Fragment der Formel I enthält, einen organischen Rest, der von 1 bis etwa 20 Kohlenstoffatome aufweist, beinhaltet; so dass die härtbare Zusammensetzung beim Härten bei Umgebungsbedingungen gehärtet wird.

8. Ein Verfahren zum Herstellen einer härtbaren Zusammensetzung oder eines härtbaren Systems, das die folgenden Schritte beinhaltet:
(i) Beimischen von mindestens einem Divinylarendioxid und mindestens einem Katalysator, um eine erste Lösung zu bilden; wobei der mindestens eine Katalysator eine oder mehrere Verbindungen beinhaltet, die ein Fragment der folgenden Formel I enthalten: 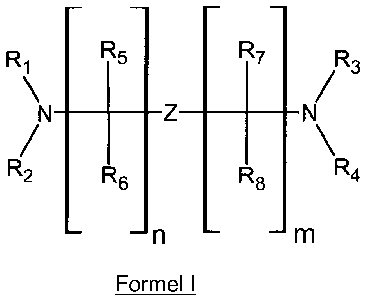 wobei Z in der obigen Struktur der Formel I O, S oder eine Einfachbindung beinhaltet; R₁-R₄ ein Alkyl oder ein Cycloalkyl, jeweils einzeln von 1 bis etwa 20 Kohlenstoffatome aufweisend, beinhalten; R₅-R₈ jeweils einzeln H oder ein Alkyl oder ein Cycloalkyl beinhalten; wobei das Alkyl oder Cycloalkyl jeweils einzeln von 1 bis etwa 20 Kohlenstoffatome aufweist; n eine ganze Zahl von 2 bis 20 beinhaltet; m eine ganze Zahl von 0 bis 18 beinhaltet; und m + n eine ganze Zahl von weniger als oder gleich etwa 20 beinhaltet; und wobei der verbleibende Abschnitt des Katalysators, der das obige Fragment der Formel I enthält, einen organischen Rest, der von 1 bis etwa 20 Kohlenstoffatome aufweist, beinhaltet; so dass die härtbare Zusammensetzung beim Härten bei Umgebungsbedingungen gehärtet wird; und
(II) Beimischen der ersten Lösung aus Schritt (I) mit mindestens einem Polythiolhärtungsmittel.

9. Ein Verfahren zum Herstellen einer härtbaren Zusammensetzung oder eines härtbaren Systems, das die folgenden Schritte beinhaltet:
(A) Beimischen von mindestens einem Polythiolhärtungsmittel; und mindestens einem Katalysator, um eine erste Lösung zu bilden, wobei der mindestens eine Katalysator eine oder mehrere Verbindungen beinhaltet, die ein Fragment der folgenden Formel I enthalten: 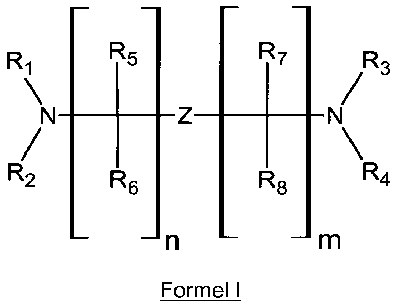 wobei Z in der obigen Struktur der Formel I O, S oder eine Einfachbindung beinhaltet; R₁-R₄ ein Alkyl oder ein Cycloalkyl, jeweils einzeln von 1 bis etwa 20 Kohlenstoffatome aufweisend, beinhalten; R₅-R₈ jeweils einzeln H oder ein Alkyl oder ein Cycloalkyl beinhalten; wobei das Alkyl oder Cycloalkyl jeweils einzeln von 1 bis etwa 20 Kohlenstoffatome aufweist; n eine ganze Zahl von 2 bis 20 beinhaltet; m eine ganze Zahl von 0 bis 18 beinhaltet; und m + n eine ganze Zahl von weniger als oder gleich etwa 20 beinhaltet; und wobei der verbleibende Abschnitt des Katalysators, der das obige Fragment der Formel I enthält, einen organischen Rest, der von 1 bis etwa 20 Kohlenstoffatome aufweist, beinhaltet; so dass die härtbare Zusammensetzung beim Härten bei Umgebungsbedingungen gehärtet wird; und
(B) Beimischen der ersten Lösung aus Schritt (A) mit mindestens einem Divinylarendioxid.

10. Ein gehärtetes Produkt, das eine gehärtete Zusammensetzung gemäß Anspruch 1 beinhaltet, wobei das gehärtete Produkt eine klebfreie Oberfläche beinhaltet.

11. Gehärtetes Produkt, das eine gehärtete Zusammensetzung gemäß Anspruch 1 beinhaltet, wobei das gehärtete Produkt nach dem Reiben der Oberfläche mit einem organischen Lösungsmittel eine unbeschädigte Oberfläche beinhaltet.

12. Gehärtetes Produkt, das eine gehärtete Zusammensetzung gemäß Anspruch 1 beinhaltet, wobei das gehärtete Produkt eine Shore-Härte-A, wie durch ASTM D2240 bestimmt, von etwa 5 bis etwa 100 beinhaltet.

13. Ein Verfahren zum Herstellen eines duroplastischen Produkts, das die folgenden Schritte beinhaltet:
(i) Herstellen einer härtbaren Zusammensetzung, beinhaltend das Beimischen von (a) mindestens einem Divinylarendioxid; (b) mindestens einem Polythiolverbindungshärtungsmittel; und (c) mindestens einem Katalysator; wobei der mindestens eine Katalysator eine oder mehrere Verbindungen beinhaltet, die ein Fragment der folgenden Formel I enthalten: 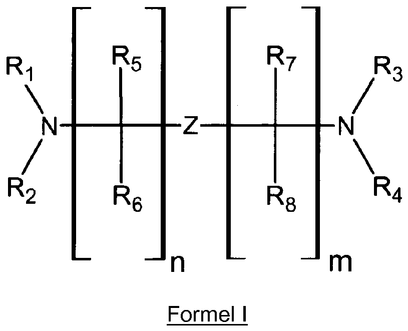 wobei Z in der obigen Struktur der Formel I O, S oder eine Einfachbindung beinhaltet; R₁-R₄ ein Alkyl oder ein Cycloalkyl, jeweils einzeln von 1 bis etwa 20 Kohlenstoffatome aufweisend, beinhalten; R₅-R₈ jeweils einzeln H oder ein Alkyl oder ein Cycloalkyl beinhalten; wobei das Alkyl oder Cycloalkyl jeweils einzeln von 1 bis etwa 20 Kohlenstoffatome aufweist; n eine ganze Zahl von 2 bis 20 beinhaltet; m eine ganze Zahl von 0 bis 18 beinhaltet; und m + n eine ganze Zahl von weniger als oder gleich etwa 20 beinhaltet; und wobei der verbleibende Abschnitt des Katalysators, der das obige Fragment der Formel I enthält, einen organischen Rest, der von 1 bis etwa 20 Kohlenstoffatome aufweist, beinhaltet; so dass die härtbare Zusammensetzung beim Härten bei Umgebungsbedingungen gehärtet wird; und
(ii) Härten der härtbaren Zusammensetzung bei Umgebungsbedingungen.

14. Verfahren gemäß Anspruch 13, wobei die Umgebungsbedingungen eine Temperatur von etwa 0 °C bis etwa 50 °C umfassen.

## Revendications

1. Une composition durcissable à même d'être durcie dans des conditions ambiantes comprenant (a) au moins un dioxyde de divinylarène ; (b) au moins un agent de durcissement à base de composé polythiol ; et (c) au moins un catalyseur ; cet au moins un catalyseur comprenant un ou plusieurs composés contenant un fragment de la Formule I suivante : 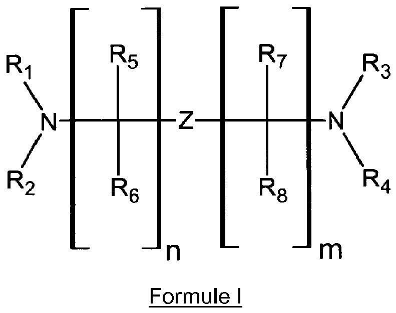 dans laquelle Z dans la structure ci-dessus de Formule I comprend O, S, ou une liaison simple ; R₁ à R₄ comprennent un alkyle ou un cycloalkyle ayant individuellement chacun de 1 à environ 20 atomes de carbone ; R₅ à R₈ comprennent individuellement chacun H, ou un alkyle ou un cycloalkyle, l'alkyle ou le cycloalkyle ayant individuellement chacun de 1 à environ 20 atomes de carbone ; n comprend un nombre entier allant de 2 à 20 ; m comprend un nombre entier allant de 0 à 18 ; et m + n comprennent un nombre entier inférieur ou égal à environ 20 ; et dans laquelle la portion restante du catalyseur contenant le fragment ci-dessus de Formule I comprend un radical organique ayant de 1 à environ 20 atomes de carbone ; de telle sorte que la composition durcissable, lors du durcissement, soit durcie dans des conditions ambiantes.

2. La composition durcissable de la revendication 1, dans laquelle cet au moins un dioxyde de divinylarène comprend du dioxyde de divinylbenzène.

3. La composition durcissable de la revendication 1, dans laquelle cet au moins un agent de durcissement à base de composé polythiol comprend un composé contenant au moins un groupement thiol.

4. La composition durcissable de la revendication 1, dans laquelle n comprend un nombre entier de 2 jusqu'à moins de 10 ou égal à 10 ; m comprend un nombre entier de 0 jusqu'à environ 8 ; et dans laquelle m + n comprend un nombre entier inférieur ou égal à environ 18.

5. La composition durcissable de la revendication 1, dans laquelle le catalyseur de durcissement comprend du 1,4-diazabicyclo[2.2.2]octane ; de la N,N,N',N",N"-pentaméthyldiéthylène triamine ; de la 1,4-diméthylpipérazine ; de la 1-méthyl-4-(2-diméthylaminoéthyl)pipérazine ; du bis-(2-diméthylaminoéthyl)éther ; de la N,N,N',N",N"-pentaméthyldipropylène triamine ; de la N,N,N,-tris-(3-diméthylaminopropyl)amine ; de la 1,3,5-tris(3-(diméthylamino)propyl)hexahydro-s-triazine ; du 1,8-diazabicyclo[5.4.0]undéc-7-ène ; de la N,N,N',N'-tétraméthyl-1,4-butane diamine ; de la N,N,N',N'-tétraméthyl-1,6-hexane diamine ; ou des mélanges de ceux-ci.

6. La composition durcissable de la revendication 1, la composition étant à même de durcir jusqu'à devenir une composition durcie non poisseuse dans les 48 heures environ dans des conditions ambiantes.

7. Un procédé pour préparer une composition ou un système durcissable comprenant le fait de mélanger ensemble (a) au moins un dioxyde de divinylarène ; (b) au moins un agent de durcissement à base de composé polythiol ; et (c) au moins un catalyseur ; cet au moins un catalyseur comprenant un ou plusieurs composés contenant un fragment de la Formule I suivante : 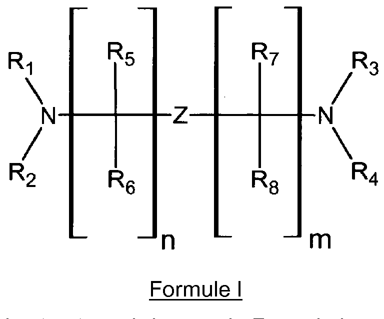 dans laquelle Z dans la structure ci-dessus de Formule I comprend O, S, ou une liaison simple ; R₁ à R₄ comprennent un alkyle ou un cycloalkyle ayant individuellement chacun de 1 à environ 20 atomes de carbone ; R₅ à R₈ comprennent individuellement chacun H, ou un alkyle ou un cycloalkyle, l'alkyle ou le cycloalkyle ayant individuellement chacun de 1 à environ 20 atomes de carbone ; n comprend un nombre entier allant de 2 à 20 ; m comprend un nombre entier allant de 0 à 18 ; et m + n comprennent un nombre entier inférieur ou égal à environ 20 ; et dans laquelle la portion restante du catalyseur contenant le fragment ci-dessus de Formule I comprend un radical organique ayant de 1 à environ 20 atomes de carbone ; de telle sorte que la composition durcissable, lors du durcissement, soit durcie dans des conditions ambiantes.

8. Un procédé pour préparer une composition ou un système durcissable comprenant les étapes consistant à :
(I) mélanger ensemble au moins un dioxyde de divinylarène et au moins un catalyseur pour former une première solution ; cet au moins un catalyseur comprenant un ou plusieurs composés contenant un fragment de la Formule I suivante : 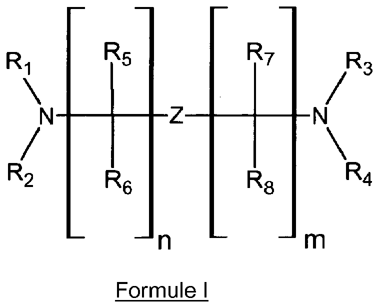 dans laquelle Z dans la structure ci-dessus de Formule I comprend O, S, ou une liaison simple ; R₁ à R₄ comprennent un alkyle ou un cycloalkyle ayant individuellement chacun de 1 à environ 20 atomes de carbone ; R₅ à R₈ comprennent individuellement chacun H, ou un alkyle ou un cycloalkyle, l'alkyle ou le cycloalkyle ayant individuellement chacun de 1 à environ 20 atomes de carbone ; n comprend un nombre entier allant de 2 à 20 ; m comprend un nombre entier allant de 0 à 18 ; et m + n comprennent un nombre entier inférieur ou égal à environ 20 ; et dans laquelle la portion restante du catalyseur contenant le fragment ci-dessus de Formule I comprend un radical organique ayant de 1 à environ 20 atomes de carbone ; de telle sorte que la composition durcissable, lors du durcissement, soit durcie dans des conditions ambiantes ; et
(II) mélanger ensemble la première solution de l'étape (I) avec au moins un agent de durcissement à base de polythiol.

9. Un procédé pour préparer une composition ou un système durcissable comprenant les étapes consistant à :
(A) mélanger ensemble au moins un agent de durcissement à base de polythiol ; et au moins un catalyseur pour former une première solution, cet au moins un catalyseur comprenant un ou plusieurs composés contenant un fragment de la Formule I suivante : 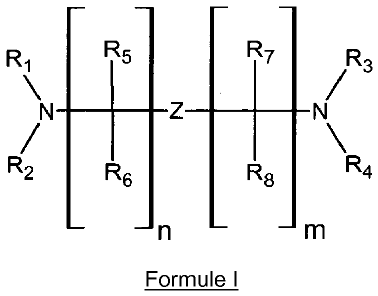 dans laquelle Z dans la structure ci-dessus de la Formule I comprend O, S, ou une liaison simple ; R₁ à R₄ comprennent un alkyle ou un cycloalkyle ayant individuellement chacun de 1 à environ 20 atomes de carbone ; R₅ à R₈ comprennent individuellement chacun H, ou un alkyle ou un cycloalkyle, l'alkyle ou le cycloalkyle ayant individuellement chacun de 1 à environ 20 atomes de carbone ; n comprend un nombre entier allant de 2 à 20 ; m comprend un nombre entier allant de 0 à 18 ; et m + n comprennent un nombre entier inférieur ou égal à environ 20 ; et dans laquelle la portion restante du catalyseur contenant le fragment ci-dessus de Formule I comprend un radical organique ayant de 1 à environ 20 atomes de carbone ; de telle sorte que la composition durcissable, lors du durcissement, soit durcie dans des conditions ambiantes ; et
(B) mélanger ensemble la première solution de l'étape (A) avec au moins un dioxyde de divinylarène.

10. Un produit durci comprenant une composition durcie de la revendication 1, le produit durci comprenant une surface non poisseuse.

11. Un produit durci comprenant une composition durcie de la revendication 1, le produit durci comprenant une surface non gâchée après que la surface a été frottée avec un solvant organique.

12. Un produit durci comprenant une composition durcie de la revendication 1, le produit durci comprenant une dureté Shore A telle que déterminée par l'ASTM D2240 allant d'environ 5 à environ 100.

13. Un procédé pour préparer un produit thermodurci comprenant les étapes consistant à :
(i) préparer une composition durcissable comprenant le fait de mélanger ensemble (a) au moins un dioxyde de divinylarène ; (b) au moins un agent de durcissement à base de composé polythiol ; et (c) au moins un catalyseur ; cet au moins un catalyseur comprenant un ou plusieurs composés contenant un fragment de la Formule I suivante : 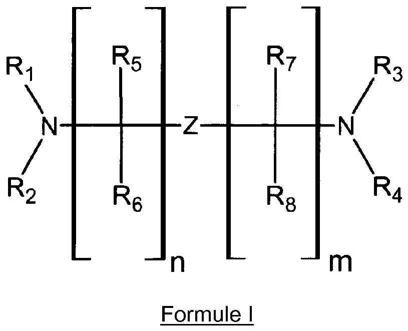 dans laquelle Z dans la structure ci-dessus de Formule I comprend O, S, ou une liaison simple ; R₁ à R₄ comprennent un alkyle ou un cycloalkyle ayant individuellement chacun de 1 à environ 20 atomes de carbone ; R₅ à R₈ comprennent individuellement chacun H, ou un alkyle ou un cycloalkyle, l'alkyle ou le cycloalkyle ayant individuellement chacun de 1 à environ 20 atomes de carbone ; n comprend un nombre entier allant de 2 à 20 ; m comprend un nombre entier allant de 0 à 18 ; et m + n comprennent un nombre entier inférieur ou égal à environ 20 ; et dans laquelle la portion restante du catalyseur contenant le fragment ci-dessus de Formule I comprend un radical organique ayant de 1 à environ 20 atomes de carbone ; de telle sorte que la composition durcissable, lors du durcissement, soit durcie dans des conditions ambiantes ; et
(ii) durcir la composition durcissable dans des conditions ambiantes.

14. Le procédé de la revendication 13, dans lequel les conditions ambiantes incluent une température allant d'environ 0 °C à environ 50 °C.
